# EUROPÄISCHE PATENTSCHRIFT

(11) **EP 1 278 028 B1**
(45) Veröffentlichungstag und Bekanntmachung des Hinweises auf die Patenterteilung: **31.05.2006**
(21) Anmeldenummer: 02015696.4
(22) Anmeldetag: 18.07.2002
(51) Int. Cl.: F25B 30/04, F25B 17/08

(54) **Wärmepumpen-Modul für eine Adsorptionswärmepumpe**
Module of heat pump for an adsorption heat pump
Module de pompe à chaleur pour une pompe à chaleur à adsorption

(30) Priorität: 21.07.2001 DE 10136835; 20.09.2001 AT 14962001
(43) Veröffentlichungstag der Anmeldung: 22.01.2003
(73) Patentinhaber: Vaillant GmbH, 42859 Remscheid (DE)
(72) Erfinder: Hocker, Thomas, Dr., 42857 Remscheid (DE); Lang, Rainer, Dr., 51067 Köln (DE); Marth, Frank, 56581 Melsbach (DE); Marx, Uwe, 51375 Leverkusen (DE); Prescha, Ralph, 42659 Solingen (DE); Wienen, Johann, 46359 Heiden (DE); Dawoud, Belal, Dr., 52066 Aachen (DE); Gasper, Ralf, 52156 Monschau (DE); Miltkau, Thorsten, 52066 Aachen (DE)
(74) Vertreter: Hocker, Thomas

(56) Entgegenhaltungen:
- DE-A- 10 033 972
- DE-A- 19 730 698
- DE-A- 19 818 807
- US-A- 4 739 631

## Beschreibung

Die Erfindung bezieht sich auf ein Wärmepumpen-Modul für eine Adsorptionswärmepumpe.

In Adsorptionswärmepumpen wird in einem Desorber Kältemittel (meist Wasser) desorbiert und dieses Kältemittel in einem Kondensator kondensiert. Desorber und Kondensator bilden ein Wärmepumpen-Modul. Zeitgleich adsorbiert anderenorts ein Adsorber Kältemittel, das von einem Verdampfer verdampft wurde. Adsorber und Verdampfer bilden ein dem erstgenannten baugleiches Wärmepumpen-Modul.

Um desorbieren zu können, muss der Desorber erhitzt werden. Das Kältemittel wird dann aus dem Desorber desorbiert, gelangt zum Kondensator und wird an diesem kondensiert. Die Kondensation wird umso mehr begünstigt, je kühler der Kondensator ist. Der heiße Desorber und der kühle Kondensator müssen sich in einem dichten Gehäuse befinden. Um die Herstellkosten und den Bauraum zu minimieren, ist es vorteilhaft, wenn sich Desorber und Kondensator in einem kleinen Gehäuse dicht beieinander befinden. Hierdurch entsteht jedoch der Nachteil, dass ein Wärmeaustausch zwischen Desorber und Kondensator in Form von Wärmestrahlung stattfinden kann, was die Kondensationsfähigkeit des Kondensators vermindert.

Wird das Wärmepumpen-Modul adsorbierend betrieben, kann Wärmestrahlung vom heißen Adsorber zum kälteren Verdampfer gelangen, was dazu führt, dass ein Teil der bei der Adsorption freiwerdenden Wärme mittels Wärmestrahlung auf den Verdampfer übergeht und dort die Möglichkeit der Einkopplung von Umgebungswärme mindert.

Es sind Wärmepumpen-Module bekannt, bei denen sich der Adsorber bzw. Desorber und der Verdampfer bzw. Kondensator in einem Gehäuse befinden. In der DE 197 30 698 A1 ist ein Wärmepumpen-Modul beschrieben, bei dem Adsorber bzw. Desorber kreis- bzw. spiralförmig angeordnet ist und der Verdampfer bzw. Kondensator zentral innerhalb des Adsorbers bzw. Desorbers liegt. Der Adsorber bzw. Desorber ist stets heißer als der Verdampfer bzw. Kondensator. Typische Arbeitstemperaturen des Adsorbers bzw. Desorbers betragen 150 bis 200°C. Bei einer Bauform gemäß DE 197 30 698 A1 strahlt dementsprechend der heiße Adsorber bzw. Desorber Wärme an die umgebende Wand des Wärmepumpen-Moduls ab. Um Wärmeverluste zu mindern, muss dementsprechend das Wärmepumpen-Modul ausreichend gedämmt werden. Ferner zeigt DE 197 30 698 A1 einen einlagigen, ebenen Adsorber bzw. Desorber und Verdampfer bzw. Kondensator, was zur Folge hat, dass das Verhältnis von Wärmepumpen-Modul-Gehäuseoberfläche zu -Volumen bei großen Einheiten ungünstig ist, was sich vorwiegend auf die Herstellkosten und die Wärmeverluste auswirkt.

Ziel der Erfindung ist es, diese Nachteile zu vermeiden und ein Wärmepumpen-Modul der eingangs erwähnten Art vorzuschlagen, bei dem Verluste vom Adsorber bzw. Desorber an die Wand des Wärmepumpen-Moduls gemindert, in der Regel sogar radial gänzlich vermieden werden und das ein günstiges Oberflächen-Volumen-Verhältnis aufweist.

Erfindungsgemäß wird dies bei einem Wärmepumpen-Modul der eingangs erwähnten Art durch die kennzeichnenden Merkmale des unabhängigen Anspruches erreicht.

Durch die vorgeschlagenen Maßnahmen wird erreicht, dass der heiße Adsorber bzw. Desorber keine Strahlungswärme an die seitlichen Außenwände des Wärmepumpen-Moduls abgeben kann. Somit müssen diese Wände nicht gedämmt werden, da die Temperatur der Umgebung annähernd auf dem Niveau (Temperaturdifferenz in der Regel kleiner 30 K) des Verdampfers bzw. Kondensators liegt.

Gemäß den Merkmalen des Anspruchs 2 ergibt sich der Vorteil, dass vom heißen Adsorber /Desorber keine Strahlungswärme zum kalten Verdampfer / Kondensator gelangen kann. Durch die Strahlungswärme würde die Kondensationsfähigkeit des Kondensators vermindert. Beim Verdampfer würde durch die Strahlungswärme die Möglichkeit der Einkopplung von Umgebungswärme gemindert.

Die Merkmale des Anspruchs 3 beschreiben eine vorteilhafte Ausgestaltung des Verdampfers / Kondensators, welche die Anordnung des Verdampfers / Kondensators um den Adsorber / Desorber in einer nichtebenen Bauform begünstigt. Bei der Kondensation am Kondensator kann sich das Kondensat in Rinnen oder Becken auf unterschiedlichen Ebenen sammeln, um dann bei der Verdampfung großflächig wieder verdampft zu werden.

Gemäß den Merkmalen des Anspruchs 4 sind der Adsorber / Desorber und der Verdampfer / Kondensator annähernd rotationssymmetrisch aufgebaut. Durch das Wort annähernd wird berücksichtigt, dass z.B. durch Anschlüsse (Einlass, Auslass), Spiralformen o.ä. Abweichungen von der reinen Symmetrie entstehen können oder auch der Aufbau als Vieleck (z.B. vier oder mehr ebene Wärmetauscher bilden den Verdampfer / Kondensator) sinnvoll sein kann.

Gemäß den Merkmalen des Anspruchs 5 wird eine vorteilhafte Form des Strahlungsschutzes beschrieben, die sich dadurch auszeichnet, dass kein gesondertes Bauteil benötigt wird. Vielmehr werden am Verdampfer / Kondensator auf der dem Adsorber / Desorber zugewandten Seite lange Lamellen angebracht, die derart geformt sind, dass diese Lamellen eine Strahlung vom Adsorber / Desorber zum gespeicherten Kältemittel und dem Wärmetauscherrohr verhindert. Lamellen verfügen über einen sogenannten Rippenwirkungsgrad, der besagt, dass mit zunehmender Lamellen- bzw. Rippenlänge die Wärmeleitung nachlässt. Ist dementsprechend die Lamelle lang genug, so findet nur noch wenig Wärmeleitung von der Wärmestrahlung aufnehmenden Rippe zum Wärmetauscherrohr statt.

Gemäß Anspruch 6 besteht der Strahlungsschutz aus mehreren schräg angeordneten Platten, was zur Folge hat, dass der Kältemitteldampf gleichförmiger vom Desorber durch den Strahlungsschutz zum Kondensator und umgekehrt vom Verdampfer zum Adsorber strömen kann.

Während gemäß Anspruch 6 die Platten vorzugsweise übereinander angeordnet sind, sind sie gemäß Anspruch 7 vorzugsweise kreisförmig angeordnet.

Gemäß den Merkmalen des Anspruchs 8 wird der gleiche Effekt wie bei Anspruch 6, jedoch bei rotationssymmetrischem Aufbau erreicht.

Die Merkmale des Anspruchs 9 beschreiben eine weitere vorteilhafte Ausführungsform des Strahlungsschutzes, der sich dadurch auszeichnet, dass - z.B. im Gegensatz zu parallelen, ebenen Platten - keine Strahlung durch den Strahlungsschutz gelangen kann. Ist die Spitze oben, d.h. die Öffnung unten, so kann sich - z.B. bei Betriebsstillstand - kein Kondensat im Inneren des Winkels ansammeln.

Gemäß den Merkmalen des Anspruchs 10 wird der gleiche Effekt, jedoch bei rotationssymmetrischem Aufbau erreicht.

Gemäß den Merkmalen des Anspruchs 11 kann erreicht werden, dass bei der Adsorption Kältemitteldampf durch den Strahlungsschutz vom Verdampfer zum Adsorber gelangen kann. Die Löcher müssen jedoch klein sein, damit bei der Desorption kaum Wärmestrahlung durch die Löcher gelangen kann.

Gemäß den Merkmalen des Anspruchs 12 ergibt sich der Vorteil, dass die Wärmestrahlung vom heißen Adsorber / Desorber über Außenwände, die nicht an den Verdampfer /Kondensator grenzen, minimiert wird.

Die Merkmale des Anspruchs 13 ergeben den Vorteil, dass möglichst viel Wärmestrahlung vom Strahlungsschutz wieder zum Desorber beziehungsweise Adsorber reflektiert wird. Somit erhitzt sich der Strahlungsschutz wenig und strahlt selbst wenig Wärmestrahlung an den Kondensator beziehungsweise Verdampfer ab.

Ausführungsbeispiele der Erfindung werden im Folgenden anhand der Fig. 1 bis 3 der Zeichnungen erläutert. Es zeigen:
Fig. 1 ein erfindungsgemäßes Wärmepumpen-Modul mit zwei Varianten des erfindungsgemäßen Strahlungsschutzes,
Fig. 2 ein erfindungsgemäßes Wärmepumpen-Modul mit zwei weiteren Varianten des erfindungsgemäßen Strahlungsschutzes und
Fig. 3 ein erfindungsgemäßes Wärmepumpen-Modul einer weiteren Variante des erfindungsgemäßen Strahlungsschutzes.

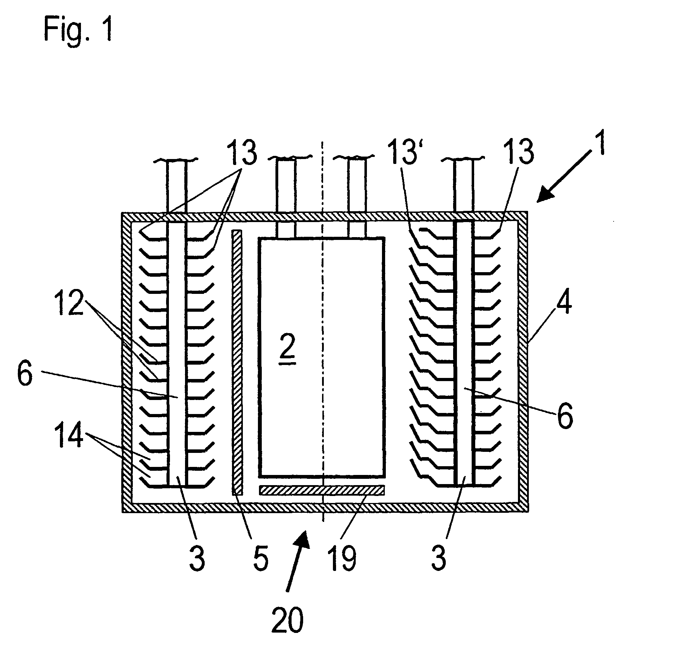

Ein Wärmepumpen-Modul 1 für eine Adsorptionswärmepumpe gemäß Fig. 1 besteht aus einem Adsorber / Desorber 2 und einem Verdampfer / Kondensator 3 in einem gemeinsamen, dichten Gehäuse 4. Der Adsorber / Desorber 2 ist zentral zwischen dem Verdampfer / Kondensator 3 angeordnet. Der Verdampfer / Kondensator 3 besteht aus Rohren 6, auf denen Lamellen 12 mit Abkantungen 13 angeordnet sind. Die Lamellen 12 mit den Abkantungen 13 bilden Rinnen 14. Zwischen dem Adsorber / Desorber 2 und dem Verdampfer / Kondensator 3 befindet sich auf der linken Seite ein Strahlungsschutz 5, welcher zumindest zum größten Teil eine unmittelbare optische Verbindung zwischen dem Adsorber / Desorber 2 und dem Verdampfer / Kondensator 3 verhindert. Der Aufbau kann rotationssymmetrisch (z.B. Adsorber / Desorber 2 zylindrisch und Verdampfer / Kondensator 3 in Form eines hohlzylindrischen Körpers) oder mehrflächig (z.B. Adsorber / Desorber 2 quaderförmig und Verdampfer / Kondensator 3 in Form von vier ebenen Körpern) sein. Auf der rechten Seite ist zwischen dem Adsorber / Desorber 2 und dem Verdampfer /Kondensator 3 ein Verdampfer / Kondensator 3 mit langen Lamellen 13' zu sehen. Die Lamellen 13' überdecken sich in radialer Richtung. Zwischen der unteren Gehäusewand 20 und dem Adsorber / Desorber 2 befindet sich ein weiterer Strahlungsschutz 19.

Das Wärmepumpen-Modul 1 kann desorbierend oder adsorbierend arbeiten. Zunächst wird die Desorption beschrieben: Heißes Wärmeträgermedium strömt in den Desorber 2, der zunächst mit dem Kältemittel Wasser gesättigt ist. Die zugeführte Wärme bewirkt, dass das Wasser desorbiert wird und somit den Desorber 2 verläßt. Der so entstehende Wasserdampf kondensiert im Kondensator 3 und gibt somit Wärme an ein Sole-Leitungssystem ab. Wärmestrahlung von dem heißen Desorber 2, die zur Seite strahlt, wird von dem Strahlungsschutz abgefangen. Gemäß der linken Darstellung wird die Wärmestrahlung von dem Strahlungsschutz 5 abgefangen. Gemäß der rechten Darstellung wird die Wärmestrahlung von den Lamellen 13' abgefangen. Deren Form verhindert, dass Strahlung direkt zum Rohr 6 gelangen kann. Aufgrund der Lamellenlänge ist auch die Wärmeleitung zum Rohr 6 gering. Wärmestrahlung vom Desorber 2 zur Gehäusewand 20 wird von dem Strahlungsschutz 19 abgefangen.

Bei der Adsorption ist der Adsorber 2 zunächst relativ trocken. Dem Verdampfer 3 wird Umgebungswärme zugeführt. Hierdurch wird Wasser, das sich um den Verdampfer 3 befindet, verdunstet. Der so entstehende Wasserdampf gelangt zum Adsorber 2, wodurch der Adsorber 2 sich erhitzt. Diese Wärme gibt der Adsorber 2 an einen Adsorber-Desorber-Kreislauf ab. Durch die Adsorption wird der Adsorber heißer; er ist stets heißer als der Verdampfer. Der Strahlungsschutz 5 beziehungsweise 13' verhindert, dass Wärme in Form von Strahlung wieder vom Adsorber zum Verdampfer gelangt. Der Strahlungsschutz 19 verhindert Wärmestrahlung vom Adsorber 2 zur Gehäusewand 20.

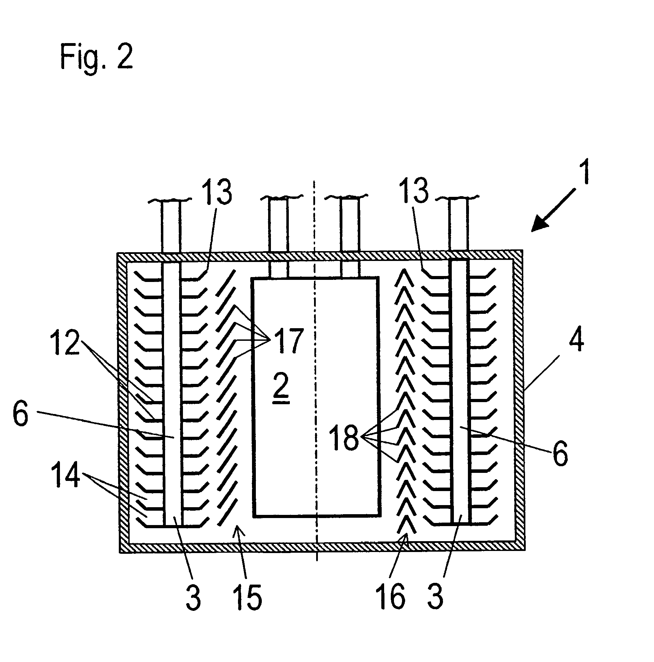

In Fig. 2 ist ein Wärmepumpen-Modul 1 mit zwei weiteren Varianten des Strahlungsschutzes zu sehen. Der Strahlungsschutz 15 besteht aus mehreren übereinander angeordneten Platten 17, die sich radial überschneiden. Der Strahlungsschutz 16 besteht aus mehreren übereinander angeordneten Winkelblechen 18, die sich radial überschneiden.

Sowohl beim Strahlungsschutz 15, als auch bei 16 kann der Strahlungsschutz - im Vergleich zu Strahlungsschutz 5 - besser von dem Kühlmitteldampf durchströmt werden, während dennoch die Wärmestrahlung zurückgehalten wird.

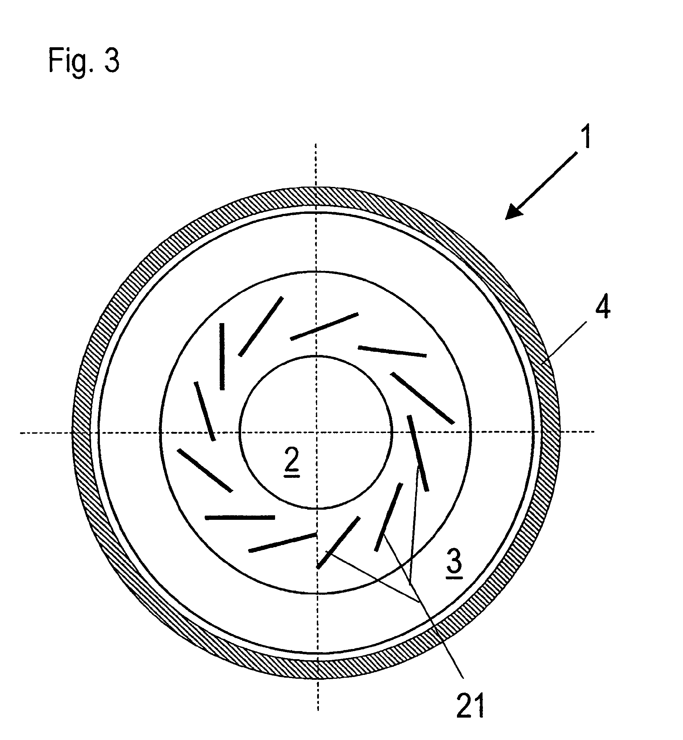

Fig. 3 zeigt eine weitere Variante eines erfindungsgemäßen Strahlungsschutzes, bestehend aus mehreren Platten 21, welche kreisförmig um den Adsorber / Desorber 2 angeordnet sind.

## Patentansprüche

1. Wärmepumpen-Modul (1) für eine Adsorptionswärmepumpe, bestehend aus einem Adsorber / Desorber (2) und einem Verdampfer / Kondensator (3) in einem gemeinsamen, dichten Gehäuse (4), **dadurch gekennzeichnet, dass** der Adsorber /Desorber (2) zentral innerhalb des Verdampfers / Kondensators (3) liegt.

2. Wärmepumpen-Modul (1) für eine Adsorptionswärmepumpe gemäß Anspruch 1, **dadurch gekennzeichnet, dass** sich zwischen Adsorber / Desorber (2) und Verdampfer / Kondensator (3) ein Strahlungsschutz (5, 13', 15, 16), welcher zumindest zum größten Teil eine unmittelbare optische Verbindung zwischen dem Adsorber /Desorber (2) und dem Verdampfer / Kondensator (3) verhindert, befindet.

3. Wärmepumpen-Modul (1) für eine Adsorptionswärmepumpe gemäß Anspruch 1 oder 2, **dadurch gekennzeichnet, dass** der Verdampfer / Kondensator (3) über Lamellen (12) verfügt, die Abkantungen (13, 13'), welche die Lamellen zu nach oben offenen Becken oder Rinnen (14) formen, aufweisen.

4. Wärmepumpen-Modul (1) für eine Adsorptionswärmepumpe gemäß einem der Ansprüche 1 bis 3, **dadurch gekennzeichnet, dass** Adsorber / Desorber (2) und Verdampfer / Kondensator (3) zumindest annähernd rotationssymmetrisch aufgebaut sind.

5. Wärmepumpen-Modul (1) für eine Adsorptionswärmepumpe gemäß Anspruch 3, **dadurch gekennzeichnet, dass** die Lamellen (13') des Verdampfers / Kondensators (3) auf der dem Adsorber / Desorber (2) zugewandten Seite mindestens 20 mm lang sind und derart geformt sind, dass sie sich radial in Teilbereichen überdecken.

6. Wärmepumpen-Modul (1) für eine Adsorptionswärmepumpe gemäß einem der Ansprüche 2 bis 5, **dadurch gekennzeichnet, dass** der Strahlungsschutz (15) aus mehreren schräg angeordneten Platten (17), welche sich radial in Teilbereichen überdecken, besteht.

7. Wärmepumpen-Modul (1) für eine Adsorptionswärmepumpe gemäß einem der Ansprüche 2 bis 5, **dadurch gekennzeichnet, dass** der Strahlungsschutz (5, 13', 15, 16) aus mehreren schräg angeordneten Platten (21), welche sich axial in Teilbereichen überdecken, besteht.

8. Wärmepumpen-Modul (1) für eine Adsorptionswärmepumpe gemäß einem der Ansprüche 2 bis 6, **dadurch gekennzeichnet, dass** der Strahlungsschutz (5, 13', 15, 16) aus mehreren Kegelstumpfmänteln, welche sich radial in Teilbereichen überdecken, besteht.

9. Wärmepumpen-Modul (1) für eine Adsorptionswärmepumpe gemäß einem der Ansprüche 2 bis 7, **dadurch gekennzeichnet, dass** der Strahlungsschutz (16) aus mehreren nach unten offenen Winkelblechen (18), welche sich radial in Teilbereichen überdecken, besteht.

10. Wärmepumpen-Modul (1) für eine Adsorptionswärmepumpe gemäß Anspruch 9, **dadurch gekennzeichnet, dass** die nach unten offenen Winkelbleche (18) vorzugsweise Ringe, welche um den Adsorber / Desorber (2) angeordnet sind, bilden.

11. Wärmepumpen-Modul (1) für eine Adsorptionswärmepumpe gemäß einem der Ansprüche 2 bis 10, **dadurch gekennzeichnet, dass** der Strahlungsschutz (5, 13', 15, 16) gelocht ist, wobei die Löcher vorzugsweise einen Durchmesser von maximal 1 mm aufweisen.

12. Wärmepumpen-Modul (1) für eine Adsorptionswärmepumpe gemäß einem der Ansprüche 1 bis 11, **dadurch gekennzeichnet, dass** sich zwischen Adsorber /Desorber (2) und mindestens einer der Gehäusewände (20) oder Teilstücke dieser Gehäusewand (20), die nicht an den Verdampfer / Kondensator (3) angrenzen, ein Strahlungsschutz (19), welcher zumindest zum größten Teil eine unmittelbare optische Verbindung zwischen dem Adsorber / Desorber (2) und dieser Gehäusewand (20) verhindert, befindet.

13. Wärmepumpen-Modul (1) für eine Adsorptionswärmepumpe gemäß einem der Ansprüche 2 bis 12, **dadurch gekennzeichnet, dass** der Strahlungsschutz (5, 13', 15, 16, 19) auf der dem Adsorber / Desorber (2) zugewandten Seite einen hohen Reflexionsgrad aufweist.

## Claims

1. A heat pump module (1) for an adsorption heat pump, comprising an adsorber /desorber (2) and an evaporator / condenser (3) accommodated in a common sealed housing (4), **characterised in that** the adsorber/desorber (2) is positioned centrally within the evaporator/condenser (3).

2. A heat pump module for an adsorption heat pump as defined in Claim 1, **characterised in that** provision is made for a radiation shield (5, 13', 15, 16) between the adsorber / desorber (2) and the evaporator / condenser (3), such radiation shield preventing at least for a major part a direct optical connection between the adsorber / desorber (2) and the evaporator / condenser (3).

3. A heat pump module (1) for an adsorption heat pump as defined in Claim 1 or Claim 2, **characterised in that** the evaporator / condenser (3) is provided with lamellae (12) having bent-up ends (13, 13') forming the said lamellae to bowls or channels (14) which are open in an upward direction..

4. A heat pump module (1) for an adsorption heat pump as defined in any of the Claims 1 to 3, **characterised in that** the adsorber / desorber (2) and the evaporator / condenser (3) are of at least approximately rotation-symmetrical design.

5. A heat pump module (1) for an adsorption heat pump as defined in Claim 3, **characterised in that** the lamellae (13') of the evaporator / condenser (3), on the side facing the adsorber / desorber (2), are at least 20 mm long and shaped in such a way that they radially overlap in at least partial areas.

6. A heat pump module (1) for an adsorption heat pump as defined in any of the Claims 2 to 5, **characterised in that** the radiation shield (15) is composed of several angularly arranged plates (17) which radially overlap in partial areas.

7. A heat pump module (1) for an adsorption heat pump as defined in any of the Claims 2 to 5, **characterised in that** the radiation shield (5, 13', 15, 16)) is composed of several angularly arranged plates (21) which axially overlap in partial areas.

8. A heat pump module (1) for an adsorption heat pump as defined in any of the Claims 2 to 6, **characterised in that** the radiation shield (5, 13', 15, 16)) is composed of several truncated cone-shaped jackets which radially overlap in partial areas.

9. A heat pump module (1) for an adsorption heat pump as defined in any of the Claims 2 to 7, **characterised in that** the radiation shield (16) is composed of several angle plates (18) which are open in a downward direction and radially overlap in partial areas.

10. A heat pump module (1) for an adsorption heat pump as defined in Claims 9, **characterised in that** the angle plates (18) open in a downward direction preferably form rings which are arranged around the adsorber / desorber (2).

11. A heat pump module (1) for an adsorption heat pump as defined in any of the Claims 2 to 10, **characterised in that** the radiation shield (5, 13', 15, 16) is perforated, with the holes of such perforation preferably having a diameter of max. 1 mm.

12. A heat pump module for an adsorption heat pump as defined in any of the Claims 1 to 11, **characterised in that** between the adsorber / desorber (2) and at least one of the housing walls 20, or portions of such housing wall (20), which are not adjoining the evaporator / condenser (3), provision is made for a radiation shield (19) which at least for a major part prevents a direct optical connection between the adsorber /desorber (2) and the housing wall 20.

13. A heat pump module (1) for an adsorption heat pump as defined in any of the Claims 2 to 12, **characterised in that** the radiation shield (5, 13', 15, 16, 19) possesses a high degree of reflection on the side facing the adsorber / desorber (2).

## Revendications

1. Module de thermopompe (1) pour une pompe à chaleur à adsorption, comprenant un adsorbant/désorbant (2) et un évaporateur/condensateur (3) installés dans un corps unique étanche (4), **caractérisé par le fait que** l'adsorbant/désorbant (2) se trouve au centre de l'évaporateur/condensateur (3).

2. Module de thermopompe (1) pour une pompe à chaleur à adsorption suivant la revendication 1, **caractérisé par le fait qu'**entre l'adsorbant/désorbant (2) et l'évaporateur/condensateur (3) se trouvent des équipements protecteurs contre les rayonnements (5, 13', 15, 16) empêchant en très grande partie une liaison optique directe entre l'adsorbant/désorbant (2) et l'évaporateur/condensateur (3).

3. Module de thermopompe (1) pour une pompe à chaleur à adsorption suivant la revendication 1 ou 2, **caractérisé par le fait que** l'évaporateur/condensateur (3) est muni de lamelles (12) qui présentent des bords pliés (13, 13') formant des creux ou des rigoles (14) ouverts en haut.

4. Module de thermopompe (1) pour une pompe à chaleur à adsorption suivant l'une des revendications 1 à 3, **caractérisé par le fait que** l'adsorbant/désorbant (2) et l'évaporateur/condensateur (3) sont d'une conception au moins à peu près symétrique en rotation.

5. Module de thermopompe (1) pour une pompe à chaleur à adsorption suivant la revendication 3, **caractérisé par le fait que** les bords pliés (13') des lamelles (12) de l'évaporateur/condensateur (3) sont au moins 20 mm de long sur le côté regardant l'adsorbant/désorbant (2) et qu'elles sont conçues de sorte à se couvrir radialement dans disférents secteurs.

6. Module de thermopompe (1) pour une pompe à chaleur à adsorption suivant l'une des revendications 2 à 5, **caractérisé par le fait que** l'équipement protecteur (15) est formé par plusieurs panneaux (17) inclinés qui se recouvrent radialement dans différents secteurs.

7. Module de thermopompe (1) pour une pompe à chaleur à adsorption suivant l'une des revendications 2 à 5, **caractérisé par le fait que** les équipements protecteurs contre les rayonnements (5, 13', 15, 16) sont formés par plusieurs panneaux (21) posés obliquement qui se recouvrent axialement dans différents secteurs.

8. Module de thermopompe (1) pour une pompe à chaleur à adsorption suivant l'une des revendications 2 à 6, **caractérisé par le fait que** les équipements protecteurs contre les rayonnements (5, 13', 15, 16) comprennent plusieurs douilles tronconiques qui se recouvrent radialement dans différents secteurs.

9. Module de thermopompe (1) pour une pompe à chaleur à adsorption suivant l'une des revendications 2 à 7, **caractérisé par le fait que** l'équipement protecteur (16) est formé par plusieurs tôles pliées (18) ouvertes vers le bas et qui se recouvrent radialement dans différents secteurs.

10. Module de thermopompe (1) pour une pompe à chaleur à adsorption suivant la revendication 9, **caractérisé par le fait que** les tôles pliées (18) ouvertes vers le bas forment de préférence des anneaux qui entourent l'adsorbant/désorbant (2).

11. Module de thermopompe (1) pour une pompe à chaleur à adsorption suivant l'une des revendications 2 à 10, **caractérisé par le fait que** les équipements protecteurs (5, 13', '15, 16) sont perforés, les trous ayant de préférence un diamètre maximal de 1 mm.

12. Module de thermopompe (1) pour une pompe à chaleur à adsorption suivant l'une des revendications 1 à 11, **caractérisé par le fait que**, entre l'adsorbant/désorbant (2) et au moins une des parois (20) du corps ou des parties de cette paroi (20)' lesquelles ne touchent pas l'évaporateur/condensateur (3), il se trouve un équipement protecteur (19) qui empêche au moins largement une liaison optique directe entre l'adsorbant/désorbant (2) et cette paroi (20).

13. Module de thermopompe (1) pour une pompe à chaleur à adsorption suivant l'une des revendications 2 à 12, **caractérisé par le fait que** les équipements protecteurs (5, 13', 15, 16, 19) du côté orienté vers l'adsorbant/désorbant (2) se signalent par un facteur de réflexion élevé.
